# EUROPÄISCHE PATENTANMELDUNG

(11) **EP 1 775 535 A1**
(43) Veröffentlichungstag der Anmeldung: **18.04.2007**
(21) Anmeldenummer: 05022247.0
(22) Anmeldetag: 12.10.2005
(51) Int. Cl.: F25D 21/14, F25D 21/00, F25D 21/02

(54) **Sensoreinheit**

(71) Anmelder: Lessing, Jürgen, 90431 Nürnberg (DE)
(72) Erfinder: Lessing, Jürgen, 90431 Nürnberg (DE)
(74) Vertreter: Manitz, Finsterwald & Partner GbR

(57) **Zusammenfassung**

Eine Sensoreinheit (17) zur Erfassung des Abtauzustandes eines Luftkühlers (11) ist zur Detektion eines Tauwasserstromes ausgebildet, der entlang eines Tauwasserablaufs (15) des Luftkühlers (11) fließt. Die Erfindung bezieht sich ferner auf eine Sensoreinheit (17) zur Erfassung eines entlang eines Flüssigkeitsablaufs erfolgenden geringen Flüssigkeitsstromes, wobei diese Sensoreinheit (17) ein elektrisches Heizelement (31), einen Temperaturfühler (33) und eine Auswerte- und Steuerschaltung (35) aufweist. Eine derartige Sensoreinheit (17) eignet sich auch besonders gut zur Überwachung der Dichtigkeit eines Sicherheitsventils einer Heizungsanlage oder kann als Fließüberwachung in einer medienführenden Leitung eingesetzt werden.

## Beschreibung

Die Erfindung betrifft eine Sensoreinheit, die zur Erfassung des Abtauzustandes eines Luftkühlers verwendbar ist.

Ein Hintergrund der Erfindung ist die Vereisung eines Luftkühlers, der beispielsweise als ein Kältemittel-Verdampfer, insbesondere als Ventilator-Luftkühler ausgebildet ist, und der zum Beispiel in Kühlräumen zum Einsatz gelangt. Aufgrund der in der Umgebung des Luftkühlers zwangsläufig vorhandenen Luftfeuchtigkeit kommt es zur Vereisung des Luftkühlers. Es ist daher ein regelmäßiges Abtauen des Eises erforderlich. Hierfür wird beispielsweise ein elektrischer Heizstab in den Luftkühler eingeschoben, der aufgrund seiner Wärmeleistung das erwünschte Abtauen bewirkt.

Ein Problem bei einem derartigen Abtauvorgang liegt in der Abtauenderkennung, d.h. in der Bestimmung des Zeitpunkts, zu dem das Eis weitestgehend abgetaut ist und der Abtauvorgang beendet bzw. die verwendete Abtauheizung deaktiviert oder entfernt werden kann. In diesem Zusammenhang ist es bekannt, einen oder zwei Temperaturfühler an dem Luftkühler anzuordnen, um anhand der gemessenen Temperatur zu ermitteln, ob noch Eis vorhanden ist. Diese Vorgehensweise ist jedoch insbesondere bei größeren Luftkühlern ungenau, da nicht genau bekannt ist, an welcher Stelle sich das meiste Eis bildet. Diesem Nachteil könnte durch eine größere Anzahl von Temperaturfühlern begegnet werden; dies würde jedoch den baulichen Aufwand unerwünscht erhöhen. In der Praxis wird der Luftkühler deshalb oft vorsorglich länger bzw. mit einer höheren Wärmeleistung beheizt als eigentlich erforderlich. Diese Maßnahme erhöht jedoch den Energieverbrauch und verlängert die Dauer des Abtauvorganges in unerwünschter Weise.

Es ist eine Aufgabe der Erfindung, eine Sensoreinheit zu schaffen, die eine zuverlässige und genaue Erfassung des Abtauzustandes gestattet.

Diese Aufgabe wird durch eine Sensoreinheit mit den Merkmalen des Anspruchs 1 und insbesondere dadurch gelöst, dass die Sensoreinheit zur Detektion eines Tauwasserstromes ausgebildet ist, der entlang eines Tauwasserablaufs des Luftkühlers fließt.

Der Erfindung liegt also die Idee zugrunde, zur Erfassung des Abtauzustandes eines Luftkühlers lediglich eine indirekte Messung vorzunehmen, nämlich indem eine Fließwassermessung durchgeführt wird. Es wird also der Fluss des durch das Abtauen des Eises entstehenden Tauwassers überwacht bzw. ausgewertet. Solange noch eine bestimmte Menge des Tauwassers fließt bzw. ermittelt wird, ist der Abtauvorgang fortzuführen. Sobald dagegen kein abfließendes Tauwasser mehr festgestellt werden kann oder ein bestimmter Mindestwert unterschritten wird, ist der Abtauvorgang zu beenden. Im Zusammenhang mit der Erfindung ist unter dem Wasserstrom bzw. Tauwasserstrom also die Wassermenge zu verstehen, die pro Zeiteinheit entlang des Wasserablaufs fließt.

Aufgrund der indirekten Messung des Tauwasserstromes ist eine einfache und genaue Bestimmung des Abtauzustandes eines Luftkühlers möglich. Die entsprechende Sensoreinheit kann kostengünstig realisiert werden und lässt sich leicht in eine für die Kühlanlage bereits vorhandene Steuerung integrieren. Die erfindungsgemäße Sensoreinheit kann auch bei einer bereits existierenden Kühlanlage nachgerüstet werden.

Vorzugsweise ist die Sensoreinheit an einem ein Gefälle aufweisenden Abschnitt des genannten Tauwasserablaufs angeordnet, so dass die Bildung einer Lache und somit die Gefahr einer Fehlmessung vermieden werden. Bei dem genannten Tauwasserablauf des Luftkühlers kann es sich beispielsweise um ein Tauwasser-Ablaufrohr, eine Tauwasser-Ablaufrinne oder eine Tauwasser-Auffangwanne bzw. einen Abschnitt hiervon handeln.

Gemäß einer besonders vorteilhaften Ausführungsform besitzt die Sensoreinheit wenigstens ein elektrisches Heizelement zum Erwärmen eines Abschnitts des genannten Tauwasserablaufs, ferner wenigstens einen benachbart zu dem Heizelement an dem Tauwasserablauf angeordneten Temperaturfühler, und eine Auswerte- und Steuerschaltung zur Auswertung eines Temperatursignals des Temperaturfühlers und zur Erzeugung eines entsprechenden Schalt- oder Warnsignals, um die Beendigung des Abtauvorganges zu bewirken. Eine derartige Sensoreinheit beruht also auf der Ausnutzung der Wärmekapazität des Tauwassers. Indem einerseits die Umgebung des Heizelements einschließlich des Bereichs des Temperaturfühlers erwärmt wird und andererseits der Bereich des Temperaturfühlers durch das Tauwasser - soweit vorhanden - direkt oder indirekt abgekühlt wird, basiert die Messung auf vergleichsweise großen Temperaturdifferenzen. Hierdurch ist die Sensoreinheit besonders empfindlich auch für einen geringen Tauwasserstrom.

Bei dieser Ausführungsform ist es beispielsweise möglich, dass der genannte Temperaturfühler an einem Bereich des Tauwasserablaufs angeordnet ist, an dem auch bei einem minimalen Tauwasserstrom noch Tauwasser fließt, beispielsweise an dem im Querschnitt tiefsten Punkt des Tauwasserablaufs. Hierdurch ist gewährleistet, dass auch bei geringem Tauwasserstrom die Umgebung des Temperaturfühlers thermisch beeinflusst wird. Der Temperaturfühler kann zur Bestimmung der Temperatur des Tauwasserablaufs, also beispielsweise eines Bereichs eines Ablaufrohrs, oder zur unmittelbaren Bestimmung der Temperatur des Tauwassers vorgesehen sein. In dem letztgenannten Fall ragt der Temperaturfühler also beispielsweise in das Ablaufrohr hinein. Zur Erzielung möglichst großer Temperaturdifferenzen ist das Heizelement vorzugsweise in räumlicher Nähe zu dem Temperaturfühler angeordnet, wobei nur ein geringer Bereich des Tauwasserablaufs bzw. des Ablaufrohrs erwärmt wird.

Die Erfindung bezieht sich auch generell auf eine Sensoreinheit zur Erfassung eines geringen entlang einer Leitung fließenden Flüssigkeitsstromes oder sonstigen Medienstromes, mit wenigstens einem elektrischen Heizelement zum Erwärmen eines Abschnitts der Leitung, wenigstens einem benachbart zu dem Heizelement an der Leitung angeordneten Temperaturfühler, und einer Auswerte- und Steuerschaltung zur Auswertung eines Temperatursignals des Temperaturfühlers und zur Erzeugung eines entsprechenden Schalt- oder Warnsignals, wie speziell im Zusammenhang mit der Abtauenderkennung bereits erläutert. Ferner bezieht sich die Erfindung auch auf die Verwendung einer derartigen Sensoreinheit zur Abtauenderkennung sowie auf weitere Verwendungen, wie nachfolgend noch erläutert wird. Insofern liegt der Erfindung also auch die Aufgabe zugrunde, eine Sensoreinheit zur Erfassung eines Flüssigkeitsstromes oder sonstigen Medienstromes mit einer besonders hohen Empfindlichkeit zu schaffen.

Bei der erläuterten Ausführungsform kann die Auswerte- und Steuerschaltung beispielsweise dergestalt konfiguriert sein, dass sie ein Überschreiten und/oder Unterschreiten eines vorgebbaren Temperaturschwellenwerts oder einen vorgebbaren zeitlichen Temperaturverlauf detektiert, insbesondere eine vorgebbare Temperaturänderungsrate; die Auswerte- und Steuerschaltung detektiert dann also ein Nachlassen des Tauwasserstromes.

Gemäß einer vorteilhaften Weiterbildung der erläuterten Ausführungsform ist der Tauwasserablauf des Luftkühlers, also beispielsweise das Ablaufrohr, stromaufwärts und stromabwärts bezüglich der Sensoreinheit thermisch von den angrenzenden Abschnitten des Ablaufs isoliert, so dass die von dem Heizelement an den Tauwasserablauf abgegebene Wärmeleistung sich auf den Bereich der Sensoreinheit konzentriert. Alternativ oder zusätzlich ist eine äußere thermische Isolierung des Tauwasserablaufs im Bereich des Heizelements und des Temperaturfühlers vorgesehen, so dass unabhängig von der Umgebungstemperatur sichergestellt ist, dass stets eine bestimmte Mindestheizleistung von dem Heizelement auf den Temperaturfühler übertragen werden kann.

Alternativ zu der erläuterten Ausführungsform der Sensoreinheit mit Heizelement und Temperaturfühler kann für die Abtauenderkennung eines Luftkühlers auch jedes beliebige andere Sensormittel zum Einsatz gelangen, das die Detektion eines Flüssigkeitsstromes gestattet.

Beispielsweise kann die Sensoreinheit einen kapazitiven Detektor und eine Auswerte- und Steuerschaltung aufweisen, die zur Auswertung eines Kapazitätsmesssignals des kapazitiven Detektors und zur Erzeugung eines entsprechenden Schalt- oder Warnsignals ausgebildet ist, um die Beendigung des Abtauvorganges zu bewirken. Bei einer derartigen Ausführungsform werden also die dielektrischen Eigenschaften des Tauwassers ausgenutzt. Das entlang des Tauwasserablaufs fließende Wasser erhöht die Dielektrizitätskonstante im elektrischen Streufeld eines Kondensators des Detektors. Dadurch wird die Kapazität des Kondensators in messbarer Weise beeinflusst. Diese Ausführungsform zeichnet sich durch ein besonders schnelles Detektionsverhalten aus.

Beispielsweise kann die Sensoreinheit auch einen optischen Detektor und eine zugeordnete Auswerte- und Steuerschaltung aufweisen, wobei die optischen Eigenschaften des Tauwasserstromes ausgenutzt werden, beispielsweise durch Bestimmung der Totalreflexion eines Sendelichtstrahls an einem Sichtfenster des Tauwasserablaufs.

Der genannte Tauwasserablauf, also beispielsweise das Ablaufrohr des Luftkühlers, ist nicht unbedingt Teil der erläuterten Sensoreinheit. Allerdings ist es möglich, dass die Sensoreinheit - als integraler Bestandteil - zumindest einen Rohrabschnitt aufweist, der an ein bereits vorhandenes Ablaufrohr angeschlossen oder eingesetzt werden kann. Diese Ausführungsform gestattet ein besonders einfaches Nachrüsten bei einer bereits vorhandenen Anlage.

Die Erfindung bezieht sich auch auf die Verwendung einer Sensoreinheit der erläuterten Art zur Überwachung der Dichtigkeit eines Sicherheitsventils einer Heizungsanlage und generell als Fließüberwachung in einer medienführenden Leitung (Flüssigkeiten, Gase).

Insbesondere bezieht sich die Erfindung auch auf eine Sensoreinheit zur Überwachung der Dichtigkeit eines Sicherheitsventils einer Heizungsanlage, wobei die Sensoreinheit zur Detektion eines Leckwasserstromes ausgebildet ist, der ausgehend von dem Sicherheitsventil entlang eines Wasserablaufs der Heizungsanlage fließt, wobei die Sensoreinheit wenigstens ein elektrisches Heizelement zum Erwärmen eines Abschnitts des Wasserablaufs, wenigstens einen benachbart zu dem Heizelement an dem Wasserablauf angeordneten Temperaturfühler und eine Auswerte- und Steuerschaltung zur Auswertung eines Temperatursignals des Temperaturfühlers und zur Erzeugung eines entsprechenden Schalt- oder Warnsignals aufweist.

Mit anderen Worten dient eine derartige Sensoreinheit zur Überwachung der Dichtigkeit eines Sicherheits- oder Überdruckventils einer Hausheizung bzw. Brauchwassererwärmung. Je nach Wasserhärte neigen derartige Ventile im Langzeitbetrieb dazu, allmählich zu verkalken, so dass ein ordnungsgemäßes Schließen nicht mehr erfolgt und ständig ein Leck- oder Tropfwasserstrom abgegeben wird. Mittels der erfindungsgemäßen Sensoreinheit kann dieser vergleichsweise geringe Wasserstrom zuverlässig und kostengünstig detektiert werden, um ein entsprechendes Warnsignal zu erzeugen. Der Nutzer der Heizungsanlage kann dann das Sicherheitsventil austauschen, um einen unerwünschten Wasser- und Energieverlust zu vermeiden.

Für den Fachmann ist selbstverständlich, dass die im Zusammenhang mit der Abtauenderkennung erläuterten Weiterbildungen der genannten Sensoreinheit ohne weiteres auch auf die Verwendung der Sensoreinheit zur Fließ- bzw. Dichtigkeitsüberwachung übertragbar sind.

Insbesondere kann die Auswerte- und Steuerschaltung dergestalt konfiguriert sein, dass sie ein Unterschreiten eines vorgebbaren Temperaturschwellenwerts oder die Dauer eines Unterschreitens eines vorgebbaren Temperaturschwellenwerts detektiert, um gegebenenfalls das Schalt- oder Warnsignal zu erzeugen.

Die Erfindung wird nachfolgend lediglich beispielhaft unter Bezugnahme auf die Zeichnungen näher erläutert.
- Fig. 1: zeigt einen Kältemittel-Verdampfer mit einem Tauwasserablauf und einer daran angeordneten Sensoreinheit.
- Fig. 2: zeigt eine Querschnittsansicht des Tauwasserablaufs mit der daran angeordneten Sensoreinheit gemäß Fig. 1.
- Fig. 3: zeigt den prinzipiellen Zusammenhang zwischen dem Tauwasserstrom und einem Temperatursignal.
- Fig. 4 und 5: zeigen mögliche Temperaturverläufe über der Zeit.
- Fig. 6: zeigt eine der Fig. 2 entsprechende Querschnittsansicht des Tauwasserablaufs mit der daran angeordneten Sensoreinheit gemäß einer weiteren Ausführungsform.
- Fig. 7: zeigt eine Ausführungsform der Sensoreinheit, bei der die Sensoreinheit einen Rohrabschnitt und ein Gehäuse aufweist.

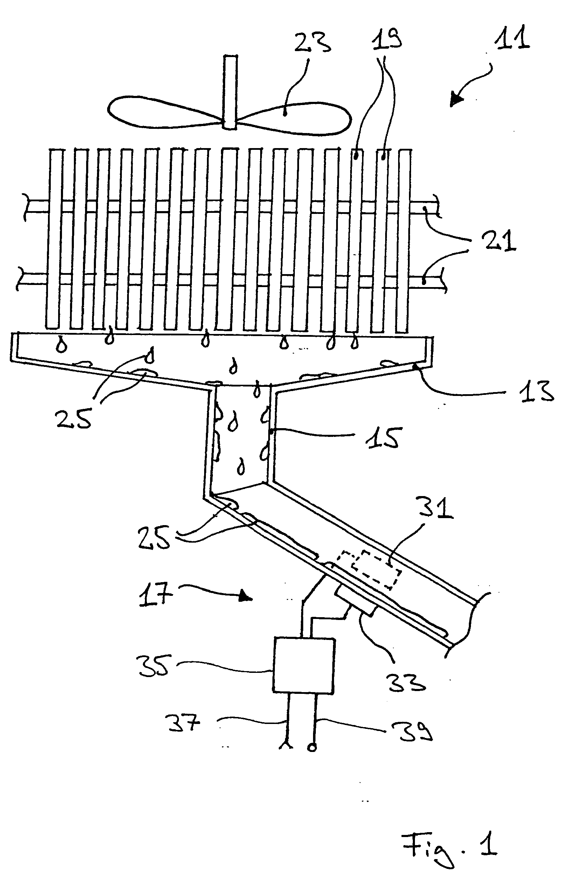

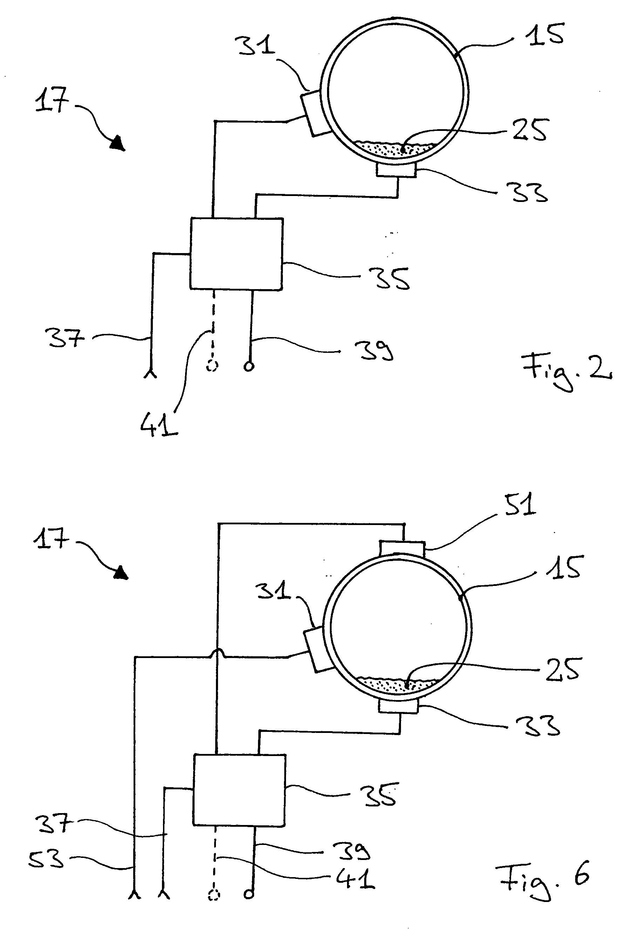

Fig. 1 zeigt in einer schematischen Seitenansicht einen Kältemittel-Verdampfer 11 mit einer Tauwasser-Auffangwanne 13, die in ein Tauwasserablaufrohr 15 mündet. An dem Ablaufrohr 15 ist eine Sensoreinheit 17 angeordnet. Der Verdampfer 11 besitzt einen an sich üblichen Aufbau mit einem Lamellenpaket 19, das von mehreren Kältemittel-Rohrleitungen 21 durchquert wird. Oberhalb des Lamellenpakets 19 ist ein Ventilator 23 angeordnet.

Der Verdampfer 11 ist Teil einer Kühlanlage, die zum Kühlen eines Raumes dient. Im Kühlbetrieb verdampft das in den Rohrleitungen 21 geführte Kältemittel. Die hierfür benötigte Energie wird der Umgebung entzogen.

Dies bewirkt eine Abkühlung des Lamellenpakets 19. Der Ventilator 23 sorgt für einen Luftstrom durch das Lamellenpaket 19, um die Raumluft an dem Lamellenpaket 19 abzukühlen.

Bei einem derartigen Verdampfer 11 kommt es aufgrund der in der Raumluft vorhandenen Luftfeuchtigkeit zu einer allmählichen Vereisung des Lamellenpakets 19, wodurch die Kühlleistung und der Wirkungsgrad des Verdampfers 11 unerwünscht vermindert werden. Es ist deshalb erforderlich, den Kühlbetrieb regelmäßig zu unterbrechen, um einen Abtauvorgang durchzuführen. Hierfür wird beispielsweise ein Elektroheizstab in das Lamellenpaket 19 eingeführt (in den Figuren nicht gezeigt), oder durch die Rohrleitungen 21 wird zeitweise ein erwärmtes Fluid geführt. Der Abtauvorgang führt zu einem allmählichen Schmelzen des Eises, so dass das Tauwasser 25 von dem Lamellenpaket 19 und den Rohrleitungen 21 in die Auffangwanne 13 abtropft, dort gesammelt wird und schließlich entlang des Ablaufrohrs 15 abfließt.

An welcher Stelle des Lamellenpakets 19 im Kühlbetrieb die stärkste Vereisung auftritt, ist insbesondere bei größeren Verdampfern 11 schwer vorherzusagen. Letztlich hängt die Verteilung der Vereisung von den Luftströmungen durch das Lamellenpaket 19 ab, die wiederum nicht nur durch den Betrieb des Ventilators 23, sondern beispielsweise auch durch die Anzahl und Lage der Türen des zu kühlenden Raumes beeinflusst werden. Dennoch ist eine genaue Abtauenderkennung erwünscht, also eine genaue automatische Bestimmung des Zeitpunkts, zu dem der Abtauvorgang zumindest weitestgehend abgeschlossen ist und der Kühlbetrieb wieder aufgenommen werden kann.

Zu diesem Zweck ist die Sensoreinheit 17 an einem ein Gefälle aufweisenden Abschnitt des Ablaufrohrs 15 angeordnet. Wie insbesondere auch aus der Querschnittsansicht gemäß Fig. 2 ersichtlich ist, besitzt die Sensoreinheit 17 ein elektrisches Heizelement 31 und einen Temperaturfühler 33, die mit einer Auswerte- und Steuerschaltung 35 verbunden sind. Diese besitzt einen elektrischen Spannungsversorgungseingang 37 und einen Schaltausgang 39. Das Heizelement 31 ist beispielsweise an einem seitlichen Bereich des Ablaufrohrs 15 angeordnet, der mit dem im Ablaufrohr 15 geführten Tauwasser 25 nicht unmittelbar in Kontakt steht. Der Temperaturfühler 33 dagegen ist beispielsweise an der Unterseite des Ablaufsrohrs 15 angeordnet, die - solange überhaupt geringe Mengen des Tauwassers 25 durch das Ablaufrohr 15 fließen - von dem Tauwasserstrom beaufschlagt ist.

Die Sensoreinheit 17 beruht auf dem Prinzip der indirekten Messung des Abtauzustandes des Verdampfers 11, nämlich indem ermittelt wird, ob bzw. in welchen Mengen noch Tauwasser 25 durch das Ablaufrohr 15 fließt. Hierfür erwärmt das Heizelement 31 das Ablaufrohr 15 in seiner Umgebung mit einer Heizleistung von beispielsweise 1 bis 5 W. Das Heizelement 31 ist so nahe an dem Temperaturfühler 33 angeordnet, dass prinzipiell auch der Bereich des Ablaufrohrs 15 in der Umgebung des Temperaturfühlers 33 erwärmt wird. Andererseits wird dieser Bereich des Ablaufrohrs 15 durch das Tauwasser 25 gekühlt, das durch das Ablaufrohr 15 abfließt und eine Temperatur besitzt, die ca. 0°C beträgt oder allenfalls geringfügig darüber liegt. Die hierdurch bewirkte Kühlleistung hängt im Wesentlichen von der pro Zeiteinheit durch das Ablaufrohr 15 fließenden Tauwassermenge ab.

Aufgrund dieser beiden gegensätzlichen thermischen Einflüsse kann aus der mittels des Temperaturfühlers 33 bestimmten effektiven Temperatur auf den durch das Ablaufrohr 15 fließenden Tauwasserstrom und somit auf die an dem Lamellenpaket 19 noch vorhandene Eismenge geschlossen werden. Zu diesem Zweck liefert der Temperaturfühler 33 ein entsprechendes Temperatursignal an die Auswerte- und Steuerschaltung 35, die das Temperatursignal auswertet, wie nachfolgend noch erläutert wird, und gegebenenfalls ein Schaltsignal erzeugt, um den Abtauvorgang zu beenden.

Zur Verwirklichung des erläuterten Detektionsprinzips ist es von Vorteil, wenn das Tauwasser-Ablaufrohr 15 eine gewisse Wärmeleitfähigkeit besitzt, wobei das Ablaufrohr 15 insbesondere aus einem wärmeleitfähigen Metall, wie beispielsweise Kupfer gefertigt sein kann.

Die Auswerte- und Steuerschaltung 35 besitzt vorzugsweise auch einen in Fig. 2 gestrichelt eingezeichneten Schalteingang 41, beispielsweise um die Auswerte- und Steuerschaltung 35 und/oder das Heizelement 31 für einen nachfolgenden Abtauvorgang zu aktivieren. Die in den Fig. 1 und 2 gezeigte Auswerte- und Steuerschaltung 35 muss nicht unbedingt separat ausgebildet sein, sondern kann auch Teil der bei Kühlanlagen üblicherweise ohnehin vorhandenen Steuerung sein.

Die in den Fig. 1 und 2 gezeigte Verbindung zwischen dem Heizelement 31 und der Auswerte- und Steuerschaltung 35 dient beispielsweise dazu, das Heizelement 31 bei Beendigung eines Abtauvorganges zu deaktivieren oder - wie nachfolgend noch erläutert wird - das Heizelement 31 rechtzeitig vor Beginn eines Abtauvorganges einzuschalten.

Nachfolgend werden verschiedene Möglichkeiten der Auswertung des Temperatursignals des Temperaturfühlers 33 mittels der Auswerte- und Steuerschaltung 35 erläutert.

Fig. 3 zeigt zunächst den prinzipiellen Zusammenhang zwischen dem Tauwasserstrom V/t durch das Ablaufrohr 15 und der vom Temperaturfühler 33 ermittelten Temperatur T: Je höher der Tauwasserstrom V/t durch das Ablaufrohr 15 ist, umso stärker wird der betreffende Abschnitt des Ablaufrohrs 15 abgekühlt, und umso geringer ist dementsprechend die vom Temperaturfühler 33 detektierte Temperatur T.

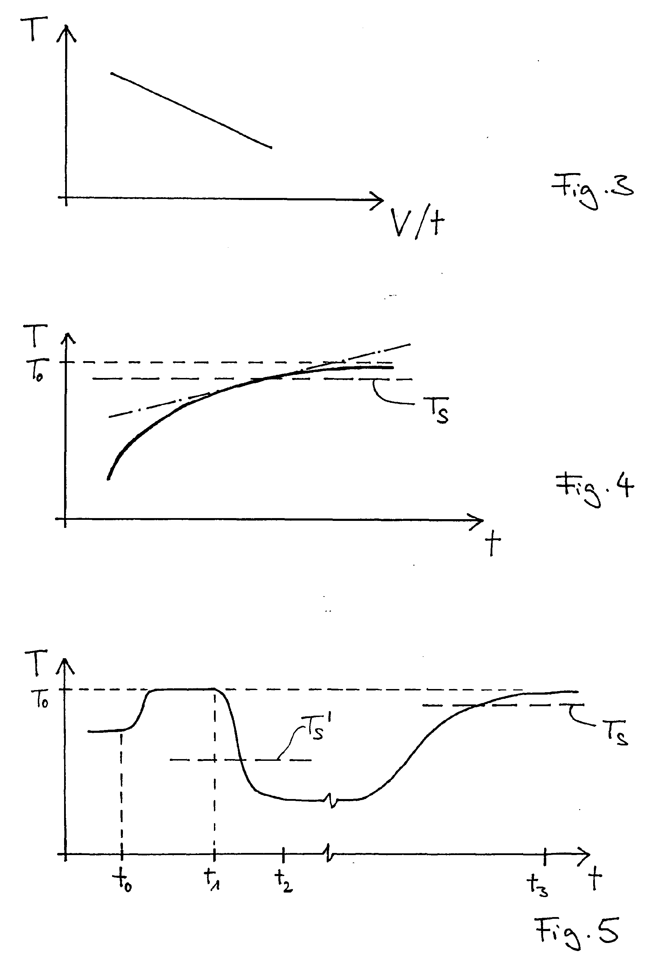

Fig. 4 zeigt mit der durchgezogenen Linie den zeitlichen Verlauf des Temperatursignals gegen Ende eines Abtauvorganges, also wenn allmählich das letzte Eis innerhalb des Lamellenpakets 19 geschmolzen ist. Dargestellt ist die vom Temperaturfühler 33 ermittelte Temperatur T über der Zeit t. In der gezeigten letzten Phase eines Abtauvorganges, nachdem der Tauwasserstrom versiegt ist, nähert sich die Temperatur T einem Grenzwert T₀ an. Dieser Grenzwert T₀ entspricht also der Temperatur des Ablaufrohrs 15 im Bereich des Temperaturfühlers 33 bei eingeschaltetem Heizelement 31, wenn kein Tauwasser 25 mehr fließt, d.h. wenn das gesamte Eis abgeschmolzen ist.

Um einen geeigneten Zeitpunkt zur Beendigung des Abtauvorganges zu bestimmen, kann die Auswerte- und Steuerschaltung 35 beispielsweise überprüfen, ob die mittels des Temperaturfühlers 33 ermittelte Temperatur T einen Temperaturschwellenwert T_{S} überschreitet, der unterhalb des erläuterten Grenzwerts T₀ liegt. Zutreffendenfalls wird am Schaltausgang 39 die Abtauenderkennung signalisiert.

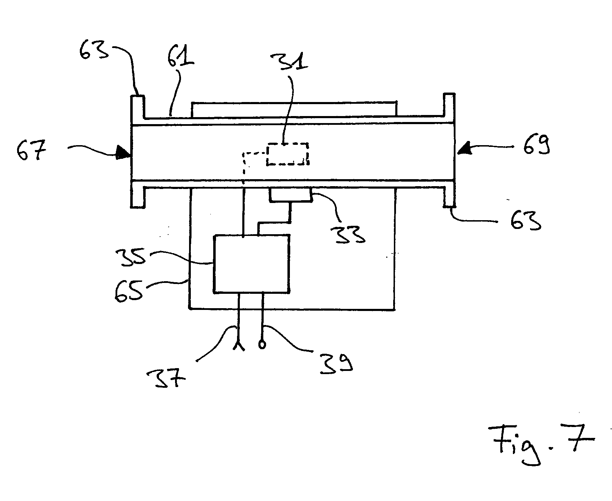

Optional kann die Auswerte- und Steuerschaltung 35 zusätzlich überprüfen, ob die ermittelte Temperatur T einen Temperaturschwellenwert T_{S}' unterschreitet (in Fig. 5 gestrichelt eingezeichnet), um hierdurch zunächst festzustellen, dass tatsächlich ein Tauwasserstrom fließt. Erst wenn diese Bedingung erfüllt ist, wird überprüft, ob die Temperatur T den bereits genannten Temperaturschwellenwert T_{S} überschreitet, wobei zutreffendenfalls die Abtauenderkennung signalisiert wird. Zusätzliche Temperaturschwellenwerte können überprüft werden, beispielsweise um zu Beginn der Messungen festzustellen, ob infolge des Aktivierens des Heizelements 31 tatsächlich ein Temperaturanstieg zu verzeichnen ist.

Alternativ hierzu ist es auch möglich, dass die Auswerte- und Steuerschaltung 35 den zeitlichen Verlauf der ermittelten Temperatur T analysiert. Beispielsweise kann überprüft werden, ob die zeitliche Temperaturänderungsrate einen vorgebbaren Schwellenwert unterschreitet. Mit anderen Worten wird der Abtauvorgang dann beendet, wenn die gemessene Temperatur T sich nur noch geringfügig ändert. Dieses Auswerteprinzip entspricht letztlich einer Überwachung der Steigung des Temperaturverlaufs in dem Diagramm gemäß Fig. 4, wie in Fig. 4 durch die strichpunktierte Linie angezeigt ist.

Fig. 5 illustriert weitere Möglichkeiten der Auswertung der vom Temperaturfühler 33 gemessenen Temperatur T. Beispielsweise kann der im Zusammenhang mit Fig. 4 erläuterte Temperaturschwellenwert T_{S} auf Grundlage des erläuterten Grenzwerts T₀ festgelegt werden. Hierfür ist es von Vorteil, wenn der Grenzwert T₀ möglichst genau und insbesondere auch für die aktuell vorherrschenden Umgebungsbedingungen bekannt ist. Zu diesem Zweck kann die Auswerte- und Steuerschaltung 35 das Heizelement 31 bereits zu einem Zeitpunkt t₀ einschalten, zu dem mit dem eigentlichen Abtauvorgang bzw. dem Erwärmen des Verdampfers 11 noch nicht begonnen worden ist. Nachdem sich zu einem späteren Zeitpunkt t₁ die vom Temperaturfühler 33 gemessene Temperatur T auf den Grenzwert T₀ stabilisiert hat, wird dieser von der Auswerte- und Steuerschaltung 35 abgespeichert bzw. zur Aktualisierung des benötigten Temperaturschwellenwerts T_{S} herangezogen, und die Auswerte- und Steuerschaltung 35 veranlasst nun das erforderliche Erwärmen des Lamellenpakets 19 bzw. der Kältemittel-Rohrleitungen 21. Daraufhin sinkt die gemessene Temperatur T aufgrund des nunmehr einsetzenden Tauwasserstromes, wie in Fig. 5 gezeigt ist.

Die im Zusammenhang mit Fig. 4 bereits erläuterte Überwachung, ob die Temperatur T den Schwellenwert Ts überschreitet, beginnt vorzugsweise mit einer vorgebbaren Verzögerung zu einem Zeitpunkt t₂ nach Beginn des Abschmelzens des Eises. Hierdurch ist gewährleistet, dass die vom Temperaturfühler 33 ermittelte Temperatur T sich bereits unterhalb des Schwellenwerts Ts befindet, wie dies ebenfalls in Fig. 5 illustriert ist.

Abweichend von der im Zusammenhang mit Fig. 5 erläuterten Aktualisierung des Temperaturschwellenwerts T_{S} kann insbesondere in Abhängigkeit von der Heizleistung des verwendeten Heizelements 31 auch ohne zeitliche Verzögerung zwischen t₀ und t₁ gearbeitet werden, d.h. in diesem Fall wird auf ein entsprechendes Steuersignal der Abtauvorgang initiiert und zugleich wird das Heizelement 31 eingeschaltet. Beispielsweise kann der Temperaturgrenzwert T₀ bei ca. 40°C bis 50°C liegen, während der Temperaturschwellenwert Ts auf ca. 25°C eingestellt sein kann, so dass die erläuterte Aktualisierung nicht benötigt wird.

In jedem Falle kann die Auswerte- und Steuerschaltung 35 auch dergestalt konfiguriert sein, dass sie zumindest nach Ablauf einer vorgebbaren Abtaudauer das Abschaltsignal zur Beendigung des Abtauvorganges erzeugt. Mit anderen Worten kann eine maximale Abtaudauer vorgegeben werden, die beispielsweise auch im Falle eines Defekts des Temperaturfühlers 33 und/oder des Heizelements 31 berücksichtigt wird. Dies ist in Fig. 5 durch den Zeitpunkt t₃ illustriert.

Ferner kann für jede der erläuterten Auswertemöglichkeiten vorgesehen sein, dass die jeweilige Bedingung (z.B. Überschreiten eines Temperaturschwellenwerts Ts oder Unterschreiten einer vorgegebenen Temperaturänderungsrate) nach Ablauf eines Warteintervalls immer noch erfüllt ist, wobei die Abtauenderkennung nur dann signalisiert wird, wenn die jeweilige Bedingung sowohl zu Beginn als auch am Ende des Warteintervalls erfüllt ist. Hierdurch kann sichergestellt werden, dass auch eventuelle Vergletscherungen am Verdampfer, die erst mit einer großen zeitlichen Verzögerung abgetaut werden und deshalb sogar zu einem nochmaligen Anstieg des Tauwasserstroms führen können, zuverlässig abgebaut werden.

Fig. 6 zeigt eine Ausführungsform der Sensoreinheit 17, die im Wesentlichen jener gemäß Fig. 2 entspricht. Insbesondere ist auch hier der Temperaturfühler 33 an einem Bereich des Tauwasser-Ablaufrohrs 15 angeordnet, an dem auch bei einem zu erwartenden minimalen Tauwasserstrom noch Tauwasser 25 fließt. Zusätzlich ist jedoch ein weiterer Temperaturfühler 51 an einem Bereich des Ablaufrohrs 15 angeordnet, der auch bei einem zu erwartenden maximalen Tauwasserstrom nicht direkt von Tauwasser 25 beaufschlagt ist. Auch dieser weitere Temperaturfühler 51 ist mit der Auswerte- und Steuerschaltung 35 verbunden, um an diese ein Referenz-Temperatursignal zu liefern. Auf Grundlage dieses Referenz-Temperatursignals kann das Temperatursignal des eigentlichen Temperaturfühlers 33 noch genauer ausgewertet werden, insbesondere indem das Temperatursignal des Temperaturfühlers 33 und das Referenz-Temperatursignal des weiteren Temperaturfühlers 51 miteinander verglichen werden. Beispielsweise kann die Differenz dieser beiden Temperatursignale mit einem vorgebbaren Schwellenwert verglichen werden. Falls die Temperaturdifferenz den Schwellenwert unterschreitet, wird davon ausgegangen, dass kein erheblicher Tauwasserstrom mehr erfolgt, und der Abtauvorgang wird beendet.

Für das Heizelement 31 kann übrigens auch ein Dauerbetrieb vorgesehen sein, wie dies für die Ausführungsform gemäß Fig. 6 beispielhaft gezeigt ist. In diesem Fall ist für das Heizelement 31 ein eigener Spannungsversorgungsanschluss 53 vorgesehen.

Fig. 7 zeigt eine Ausführungsform der Sensoreinheit 17, bei der diese zusätzlich einen Rohrabschnitt 61 mit Verbindungsflanschen 63 aufweist, der in ein Tauwasser-Ablaufrohr 15 eingesetzt werden kann. Ferner besitzt die Sensoreinheit 17 gemäß Fig. 7 ein Gehäuse 65, das im Wesentlichen sämtliche Bestandteile der Sensoreinheit 17 umschließt, wobei das Gehäuse zumindest einen Tauwasser-Einlass 67, einen Tauwasser-Auslass 69, einen Spannungsversorgungseingang 37 und einen Abtauenderkennungs-Schaltausgang 39 besitzt. Eine derartige Sensoreinheit eignet sich besonders gut zur Nachrüstung an bereits existierenden Anlagen.

Zu den Figuren ist noch anzumerken, dass das Heizelement 31 und der Temperaturfühler 33 auch unmittelbar benachbart zueinander angeordnet sein können, wobei das Heizelement 31 und der Temperaturfühler 33 sich insbesondere berühren oder in einer gemeinsamen Einheit verbunden sein können.

Abweichend von der Darstellung in den Figuren müssen das Heizelement 31 und der Temperaturfühler 33 nicht unbedingt auf derselben Höhe (d.h. an demselben Längsabschnitt) des Tauwasserablaufs angeordnet sein. Stattdessen kann das Heizelement 31 auch stromaufwärts oder stromabwärts bezüglich des Temperaturfühlers 33 angeordnet sein.

Insbesondere ist es möglich, dass auch das Heizelement 31 an der Unterseite des Tauwasserablaufs angeordnet ist, so wie dies in den Figuren für den Temperaturfühler 33 gezeigt ist. Versuche haben ergeben, dass eine besonders hohe Detektionssicherheit erzielt wird, wenn sowohl das Heizelement 31 als auch der Temperaturfühler 33 an der Unterseite des Tauwasserablaufs angeordnet sind; alternativ befindet sich der Temperaturfühler oberhalb des Heizelements (d.h. die Anordnung von Heizelement 31 und Temperaturfühler 33 ist gegenüber der Darstellung gemäß Fig. 2 vertauscht).

Schließlich ist anzumerken, dass sich die im Zusammenhang mit den Figuren erläuterte Sensoreinheit 17 generell besonders gut zur Detektion eines geringen Flüssigkeits- oder Gasstromes und insbesondere auch zur Überwachung der Dichtigkeit eines Sicherheitsventils einer Heizungsanlage eignet.

### Bezugszeichenliste

- 11: Verdampfer
- 13: Tauwasser-Auffangwanne
- 15: Tauwasser-Ablaufrohr
- 17: Sensoreinheit
- 19: Lamellenpaket
- 21: Kältemittel-Rohrleitung
- 23: Ventilator
- 25: Tauwasser
- 31: Heizelement
- 33: Temperaturfühler
- 35: Auswerte- und Steuerschaltung
- 37: Spannungsversorgungseingang
- 39: Schaltausgang
- 41: Schalteingang
- 51: weiterer Temperaturfühler
- 53: Spannungsversorgungsanschluss
- 61: Rohrabschnitt
- 63: Verbindungsflansch
- 65: Gehäuse
- 67: Tauwasser-Einlass
- 69: Tauwasser-Auslass

- V/t: Tauwasserstrom
- T: Temperatur
- T₀: Temperaturgrenzwert
- T_{S}: Temperaturschwellenwert
- T_{S'}: Temperaturschwellenwert

- t: Zeit
- t₀: Zeitpunkt des Einschaltens des Heizelements 31
- t₁: Beginn des Abtauvorganges
- t₂: Beginn des Schwellenwertvergleichs
- t₃: spätester Zeitpunkt der Beendigung des Abtauvorganges

## Patentansprüche

1. Sensoreinheit (17) zur Erfassung des Abtauzustandes eines Luftkühlers (11),
**dadurch gekennzeichnet,**
**dass** die Sensoreinheit zur Detektion eines Tauwasserstromes (25) ausgebildet ist, der entlang eines Tauwasserablaufs (15) des Luftkühlers fließt.

2. Sensoreinheit nach Anspruch 1,
**dadurch gekennzeichnet,**
**dass** die Sensoreinheit an einem ein Gefälle aufweisenden Abschnitt des Tauwasserablaufs (15) angeordnet ist,
und/oder
**dass** es sich bei dem Tauwasserablauf (15) um ein Tauwasser-Ablaufrohr, eine Tauwasser-Ablaufrinne oder eine Tauwasser-Auffangwanne handelt.

3. Sensoreinheit nach einem der vorhergehenden Ansprüche,
**dadurch gekennzeichnet,**
**dass** die Sensoreinheit
- wenigstens ein elektrisches Heizelement (31) zum Erwärmen eines Abschnitts des Tauwasserablaufs (15),
- wenigstens einen in der Nähe des Heizelements an dem Tauwasserablauf angeordneten Temperaturfühler (33), und
- eine Auswerte- und Steuerschaltung (35) zur Auswertung eines Temperatursignals des Temperaturfühlers und zur Erzeugung eines entsprechenden Schalt- oder Warnsignals aufweist.

4. Sensoreinheit nach Anspruch 3,
**dadurch gekennzeichnet,**
**dass** mittels der Auswerte- und Steuerschaltung (35) ein Überschreiten oder Unterschreiten wenigstens eines vorgebbaren Temperaturschwellenwerts (Ts) detektierbar ist,
und/oder
**dass** mittels der Auswerte- und Steuerschaltung (35) ein Unterschreiten eines Temperaturschwellenwerts (Ts') und ein nachfolgendes Überschreiten eines Temperaturschwellenwerts (Ts) detektierbar sind,
und/oder
**dass** mittels der Auswerte- und Steuerschaltung (35) ein vorgebbarer zeitlicher Temperaturverlauf detektierbar ist.

5. Sensoreinheit nach einem der Ansprüche 3 oder 4,
**dadurch gekennzeichnet,**
**dass** mittels der Auswerte- und Steuerschaltung (35) ein Abschaltsignal zur Beendigung des Abtauvorganges erzeugbar ist,
und/oder
**dass** mittels der Auswerte- und Steuerschaltung (35) bei Beendigung des Abtauvorganges auch das Heizelement (31) abschaltbar ist,
und/oder
**dass** mittels der Auswerte- und Steuerschaltung (35) zumindest nach Ablauf (t₃) einer vorgebbaren Abtaudauer ein Abschaltsignal zur Beendigung des Abtauvorganges erzeugbar ist,
und/oder
**dass** mittels der Auswerte- und Steuerschaltung (35) das Heizelement (31) bereits vor Beginn (t₁) des Abtauvorganges aktivierbar ist (t₀) und nach Ablauf einer vorgebbaren Heizdauer ein Grenztemperatursignal (T₀) des Temperaturfühlers ermittelbar ist.

6. Sensoreinheit nach einem der Ansprüche 3 bis 5,
**dadurch gekennzeichnet,**
**dass** das Heizelement (31) und wenigstens ein Temperaturfühler (33) an einer Unterseite des Tauwasserablaufs (15) angeordnet sind.

7. Sensoreinheit nach einem der Ansprüche 3 bis 6,
**dadurch gekennzeichnet,**
**dass** der Temperaturfühler (33) an einem Bereich des Tauwasserablaufs (15) angeordnet ist, an dem auch bei einem minimalen Tauwasserstrom noch Tauwasser (25) fließt,
**dass** ein weiterer Temperaturfühler (51) an einem Bereich des Tauwasserablaufs (15) angeordnet ist, an dem auch bei einem maximalen Tauwasserstrom kein Tauwasser fließt, und
**dass** mittels der Auswerte- und Steuerschaltung (35) ein Temperatursignal des Temperaturfühlers und ein Referenz-Temperatursignal des weiteren Temperaturfühlers auswertbar sind.

8. Sensoreinheit nach einem der Ansprüche 3 bis 7,
**dadurch gekennzeichnet,**
**dass** der Tauwasserablauf (25) stromaufwärts und stromabwärts der Sensoreinheit (17) thermisch isoliert ist,
und/oder
**dass** der Tauwasserablauf (25) im Bereich des Heizelements (31) und des Temperaturfühlers (33) eine äußere thermische Isolierung aufweist.

9. Sensoreinheit nach einem der Ansprüche 1 oder 2,
**dadurch gekennzeichnet,**
**dass** die Sensoreinheit
- einen kapazitiven Detektor und
- eine Auswerte- und Steuerschaltung zur Auswertung eines Kapazitätsmesssignals des kapazitiven Detektors und zur Erzeugung eines entsprechenden Schalt- oder Warnsignals aufweist.

10. Sensoreinheit nach einem der vorhergehenden Ansprüche,
**dadurch gekennzeichnet,**
**dass** die Sensoreinheit einen Rohrabschnitt (61) aufweist, der in ein Tauwasser-Ablaufrohr (15) des Luftkühlers (11) einsetzbar ist,
und/oder
**dass** die Sensoreinheit ein Gehäuse (65) aufweist, das die weiteren Bestandteile der Sensoreinheit umschließt, wobei das Gehäuse zumindest einen Tauwasser-Einlass (67), einen Tauwasser-Auslass (69), einen Energieversorgungseingang (37) und einen Abtauenderkennungs-Schaltausgang (41) aufweist.

11. Sensoreinheit zur Fließüberwachung in einer medienführenden Leitung und insbesondere zur Überwachung der Dichtigkeit eines Sicherheitsventils einer Heizungsanlage,
**dadurch gekennzeichnet,**
**dass** die Sensoreinheit zur Detektion eines Medienstromes ausgebildet ist, wobei die Sensoreinheit
- wenigstens ein elektrisches Heizelement zum Erwärmen eines Abschnitts der Leitung,
- wenigstens einen in der Nähe des Heizelements an der Leitung angeordneten Temperaturfühler und
- eine Auswerte- und Steuerschaltung zur Auswertung eines Temperatursignals des Temperaturfühlers und zur Erzeugung eines entsprechenden Schalt- oder Warnsignals aufweist.

12. Sensoreinheit nach Anspruch 11,
**dadurch gekennzeichnet,**
**dass** mittels der Auswerte- und Steuerschaltung ein Unterschreiten eines vorgebbaren Temperaturschwellenwerts oder die Dauer eines Unterschreitens eines vorgebbaren Temperaturschwellenwerts detektierbar ist.
